# EUROPEAN PATENT SPECIFICATION

(11) **EP 2 846 140 B1**
(45) Date of publication and mention of the grant of the patent: **27.02.2019**
(21) Application number: 13183249.5
(22) Date of filing: 05.09.2013
(51) Int. Cl.: G01G 11/04, A21C 5/00

(54) **Device for weighing dough and method for operating such device**
Vorrichtung zum Wiegen von Teig und Verfahren zum Betrieb einer solchen Vorrichtung
Dispositif de pesée de pâte et procédé pour faire fonctionner un tel dispositif

(43) Date of publication of application: 11.03.2015
(73) Proprietor: Radie B.V., 4104 BC Culemborg (NL)
(72) Inventor: Van Blokland, Johannes Josephus Antonius, 1251 BG Laren (NL)
(74) Representative: Patentwerk B.V.

(56) References cited:
- EP-A2- 0 145 351
- GB-A- 2 391 323

## Description

The present invention relates to an apparatus for weighing dough. More in particular, the invention relates to a device for conveying a plurality of endless dough pieces, extending essentially in parallel lanes on said conveyor in a direction of conveyance.

Such devices are known in the art, for example from the European Patent EP 2 116 821 in the name of the same applicant. The device disclosed therein has proved to be an improvement over the prior art, but a demand for further development has appeared.

In particular, when applied in circumstances wherein a plurality of continuous dough pieces is processed that appear not to have equal average weight distributions, it is considered disadvantageous that an average of multiple dough pieces is weighed, in order to determine a common cutting length for all pieces, based on a desired weight per piece.

One solution may be to split up the single conveyor into a plurality of small conveyors, one for each (endless) dough piece, but this has several disadvantages. The construction is complex, and since there is a space in between the separate conveyors, there is a higher risk of filthiness such as dough and flour residue occurring in between the conveyors, which leads to more maintenance and possible negative influence on the weighing performance.

Under some circumstances the use of one or more weighing rollers may be desired, positioned under the endless conveyor, for measuring the dough conveyed by the conveyor. However, such solution has the disadvantage that a weight-curve of a dough piece measured has a triangular deformation, and it has appeared to be very sensitive to imperfections in the conveyor belt.

It is a goal of the present invention, to provide a solution that does not have the above disadvantages, or at least to provide a useful alternative to the state of the art.

The invention thereto proposes a device for weighing dough, comprising an endless conveyor for conveying a plurality of endless or continuous dough pieces extending essentially in parallel lanes on said conveyor in a direction of conveyance, a weighing-unit, arranged under the endless conveyor, wherein the weighing unit comprises multiple weighing rows, spread over the width of the conveyor, each row comprising at least one rectangular weighing section, for independently of the other weighing sections weighing a different dough piece of said plurality of endless or continuous dough pieces.

With respect to the state of the art, the present invention takes away the disadvantage that a weight measurement has a trapezium- or V-shaped curve. Preferably, according to the present invention, the length of a rectangular weighing section is chosen such that it matches the length of a dough piece to be measured. A measurement is then performed to determine the weight of the piece of dough on the weighing device. The measured weight is compared to an expected and/or desired weight of the dough piece. If the weight is higher than the expected or desired weight of the measured length, a cutting operation may be performed earlier, that is, a shorter piece may be cut off the endless dough piece in order to obtain a desired weight, or the other way round, if the weight is lower than the expected or desired weight of the measured length, a cutting operation may be performed later, that is, a longer piece may be cut off the endless dough piece in order to obtain a desired length.

According to the present invention, a method for measuring the weight of a dough piece with U,D (unit, decimal) times the length of a weighing section of a device as described above, wherein each row comprises one rectangular weighing section, comprises the steps of:
A. Transporting at least one endless dough piece on a lane of the conveyor;
B.Measuring the weight of the dough on the weighing section;
C. Displacing the dough one length of the weighing section;
D. Repeating steps B and C U-1 times;
E.Measuring the weight on the weighing section again after a displacement of the dough of 0,D length of the weighing section and multiplying the measurement value by 0,D;
F. Adding up the weights thus obtained.

However, it is not always possible to have the rectangular weighing section corresponding with the length of a dough piece to be cut off from the endless or continuous dough piece. Possibly because the length of the dough piece to be cut is too long, possibly because it changes during use. Furthermore, in some cases an alternative to the above method may be desired.

Therefor, in a further embodiment, at least one row comprises a plurality of weighing sections, arranged behind each other in the direction of conveyance. At least one of the weighing sections may have a different length than the other ones, or in particular, each of the weighing sections has a different length.

Such configuration may then be used in a method according to claim 10.

When differences are used, it may even be necessary to subtract the weight measured by a weighing section.

For receiving weight information from the weighing sections and displacement information of the conveyor, and determining the weight per unit of length of the dough on each lane, the device may comprise a processor, which may further be configured to generate a control signal for a further processing device of each lane, like a cutter, for controlling the further processing device based on the determined weight, such as the cumulative weight per lane.

In yet another embodiment, the weighing unit comprises a weighing area, wherein weighing rows and weighing sections are configurable. With this solution, every desired shape of dough piece to be weighed can be weighed, with one and the same device, and a change in a desired shape just requires reconfiguration of the device. The weighing area may thereto for instance comprise a weighing matrix, with weighing cells, from which weighing sections can be defined. These cells may have a size equal or less than 3 x 3 cm, preferably equal or less than 2 x 2 cm, and even more preferably equal or less than 1 x 1 cm.

It is possible that an expected length of a dough piece on a lane is not an exact multiple of weighing cells of sections. In such case, a somewhat shorter or longer piece of dough can be measured, wherein the weight is determined by extrapolation or interpolation respectively. Preferably the measurement is performed on actual dough that is to form part of the piece to be cut, that is, a part of the dough piece is weighed twice, for which a correction is applied later on.

A method according to the invention for measuring a weight of a dough piece with the above described device comprises the steps of:
A. Transporting at least one endless dough piece on a lane of the conveyor;
B. Configuring an array of weighing sections that corresponds to the format of a dough piece to be weighed;
C. Measuring the weight on the weighing sections of the array;
F. Adding up the weights thus obtained.

Since a general purpose of the device according to the present invention is to weigh an amount of dough that needs to be cut from the endless dough sheet, it may further comprise either one knife that can be displaced over the width of the conveyor, or a plurality of cutting units downstream the weighing units, for separately and independently cutting each of the parallel dough pieces, based on the determined weights by the weighing sections.

Thereto, the invention also relates to a method for controlling a cutting device for an endless dough piece, comprising:
H. Obtaining a weight setpoint for a dough piece to be cut;
I. Determining an expected length of the endless dough piece, expected to have the setpoint weight, based on an expected weight per unit of length;
J. Determining the weight of a dough piece with the expected length as described above;
K. Calculating multiplication factor that indicates how many times an expected weight the determined weight is;
L. Dividing an expected length of the dough piece to be cut by the multiplication factor;
M. Cutting the dough piece at the divided length.

After cutting a dough piece has been cut, the cutting line forms a new initiation point for a next dough piece, and weight measurement takes place from the new initiation point.

The invention will now be elucidated into more detail with reference to the following figures. Herein:
Figure 1 shows a device according to a first embodiment of the present invention;
Figure 2 shows a device according to a second embodiment of the present invention;
Figure 3 shows a device according to a third embodiment of the present invention; and
Figure 4 shows a device according to a fourth embodiment of the present invention.

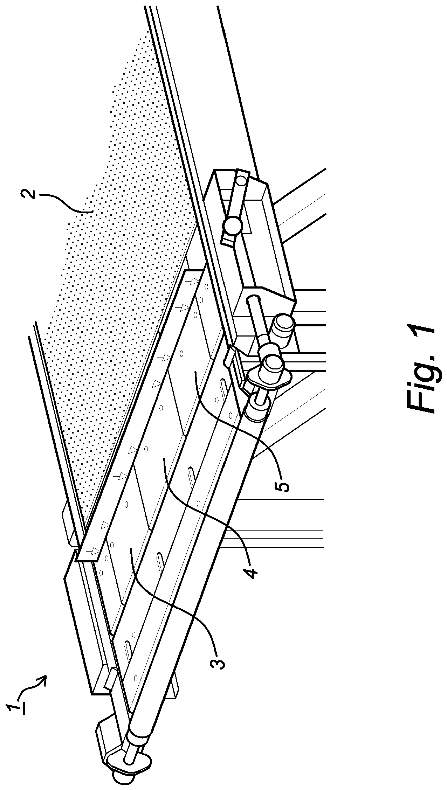

Figure 1 shows a device 1 for weighing dough, comprising an endless conveyor 2 (partly shown) for conveying a plurality of endless or continuous dough pieces extending essentially in parallel lanes on said conveyor in a direction of conveyance; a weighing-unit, arranged under the endless conveyor, comprising multiple weighing rows spread over the width of the conveyor, wherein each row comprises at least one rectangular weighing section 3, 4, 5 (normally covered with the endless conveyor), for independently of the other weighing sections weighing a different dough piece of said plurality of endless or continuous dough pieces.

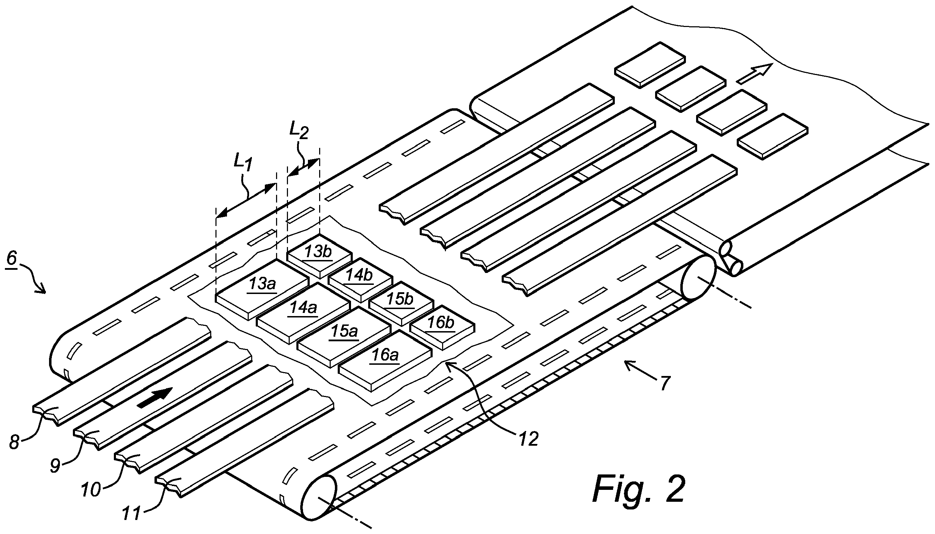

Figure 2 shows a device 6 for weighing dough, comprising an endless conveyor 7 for conveying a plurality of endless or continuous dough pieces 8, 9, 10, 11 extending essentially in parallel lanes on said conveyor in a direction of conveyance.

For ruling out, or at least avoiding influence of the tension of the conveyor on the measurement, the conveyor is arranged slackly in a width direction. Thereto, it may be provided with one or more transition parts, arranged slightly inward of the outer edges of the conveyor in the width direction, and wherein the transition parts are arranged to provide the middle part in between the transition part with a substantially flexible suspension in a direction perpendicular to a plane defined by the width direction and the direction of conveyance.

In the embodiment shown, the outer edges of the conveyor comprise a toothed belt, and wherein the device comprises gear drive for driving the conveyor. A drive configuration with a toothed belt is free of slip, and allows to determine and to keep track of the exact position of the belt. The conveyor may preferably be driven at both sides, and may further comprise a line, extending over the with of the conveyor perpendicular to the direction of conveyance, for verifying a correct placement of the conveyor with respect to the gear drive. Other belts may be used as well in combination with the features of the present embodiment.

The device further comprises a weighing-unit 12, arranged under the endless conveyor, comprising multiple weighing rows 13, 14, 15, 16, spread over the width of the conveyor, each row comprising two rectangular weighing sections (normally covered by the conveyor) 13a, 13b, 14a, 14b, 15a, 15b, 16a, 16b, for independently of the other weighing sections weighing a different dough piece of said plurality of endless or continuous dough pieces.

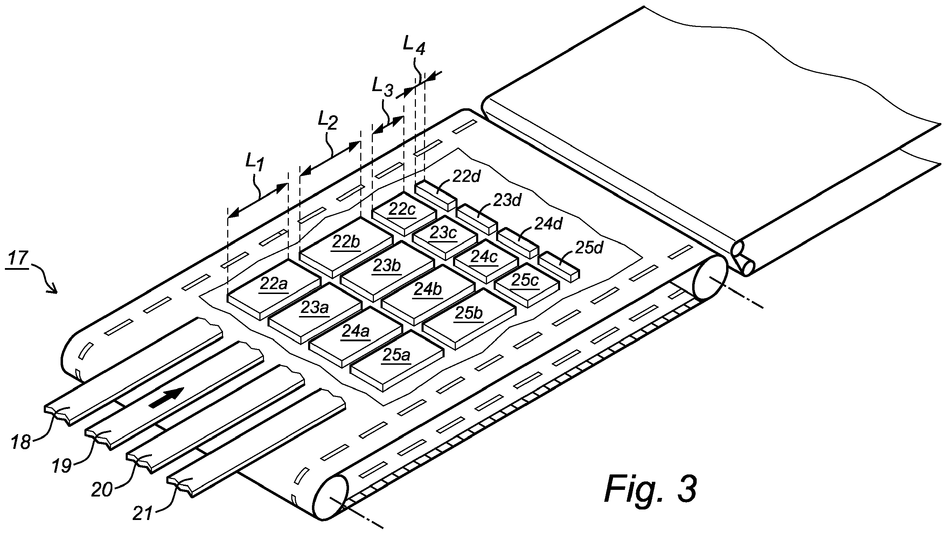

Figure 3 shows a device 17 for weighing dough, comprising an endless conveyor 18 for conveying a plurality of endless or continuous dough pieces 18, 19, 20, 21 extending essentially in parallel lanes on said conveyor in a direction of conveyance, a weighing-unit, arranged under the endless conveyor, comprising multiple weighing rows, spread over the width of the conveyor, each row comprising four rectangular weighing sections 22a-d, 23a-d, 24a-d, 25a-d, for independently of the other weighing sections weighing a different dough piece of said plurality of endless or continuous dough pieces 18, 19, 20, 21.

In the embodiments from figures 1, 2 and 3, a weighing section may typically be formed by a table, having a length between 5 and 80 cm. For instance, in figure 3 weighing sections 22-25a have lengths of 300 mm, weighing sections 22-25b have lengths of 200 mm, weighing sections 22-25c have lengths of 100 mm and weighing sections 22-25d have lengths of 50 mm. A length here is to be seen in the direction of conveyance. The width of all sections may be equal, and chosen such that the required width of the conveyor can be used.

The device according to the invention may even have an exchangeable weighing section, that allows to quickly replace the weighing tables. In such case, the configurations from figures 1, 2 and 3 can be realized in one and the same device.

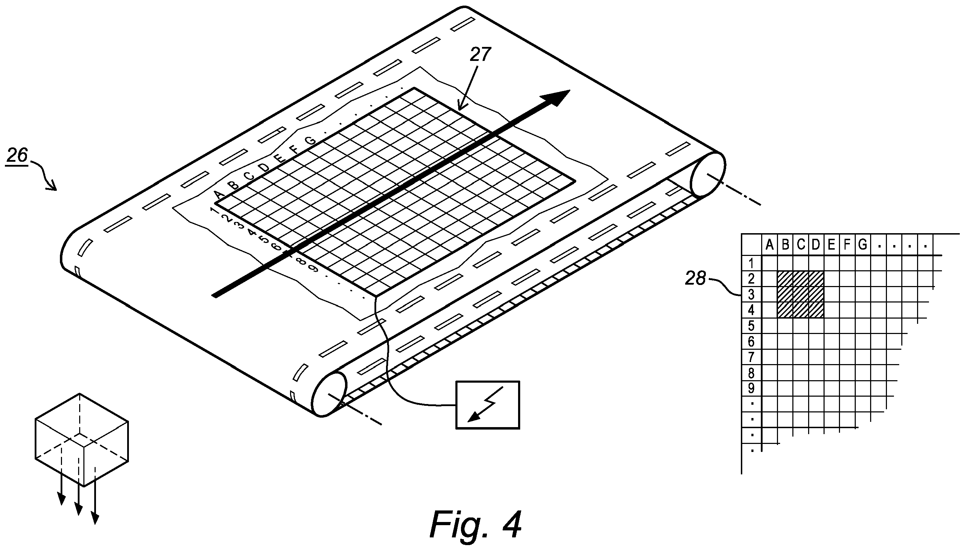

Figure 4 shows a further embodiment of a device 26 according to the present invention, wherein the weighing device comprises a weighing area 27, wherein weighing rows and weighing sections, are configurable. As shown in the figure, the weighing area comprises a weighing matrix, with weighing cells a1, etc, from which weighing sections can be defined, or freely configured, as is shown in scheme 28. These cells for instance have a size equal or less than 3 x 3 cm, preferably equal or less than 2 x 2 cm, and even more preferably equal or less than 1 x 1 cm.

The matrix may be formed by a touch-screen like device over which the endless conveyor moves, or a configurable array of sensitive piezo elements, or a foil with a printed circuit that contacts locally when a pressure is applied, or other solutions known in the art.

Not only can a weight be determined very precisely with this embodiment, but it is also possible to determine shapes of dough pieces conveyed over the conveyor.

## Claims

1. Device (1) for weighing dough, comprising:
- a single endless conveyor belt (2),
- for conveying a plurality of endless or continuous dough pieces (8, 9, 10, 11) extending essentially in parallel lanes on said conveyor in a direction of conveyance;
- a weighing-unit, arranged under the endless conveyor belt,
wherein
- the weighing unit comprises multiple weighing rows,
spread over the width of the conveyor, and
- each row comprising at least one rectangular weighing section (3, 4, 5), for independently of the other weighing sections weighing a different dough piece of said plurality of endless or continuous dough pieces **characterised in that**
- at least one row comprises a plurality of weighing sections, arranged behind each other in the direction of conveyance; wherein at least one of the weighing sections has a different length than the other ones.

2. Device (1) according to claim 1, wherein each of the weighing sections (3, 4, 5) has a different length compared to weighing sections in the same weighing row.

3. Device (1) according to any of the preceding claims, wherein a weighing section (3, 4, 5) is formed by a table, having a length between 5 and 80 cm.

4. Device (1) according to any of the preceding claims, comprising a processor, for receiving weight information from the weighing sections (3, 4, 5) and displacement information of the conveyor (2), and determining the weight per unit of length of the dough on each lane.

5. Device (1) according to claim 4, wherein the processor is further configured to generate a control signal for a further processing device of each lane, like a cutter, for controlling the further processing device based on the determined weight, such as the cumulative weight per lane.

6. Device (1) according to any of the preceding claims, wherein the weighing unit comprises a weighing area (27), wherein weighing rows and weighing sections, are configurable.

7. Device (1) according to claim 6, wherein the weighing area (27) comprises a weighing matrix, with weighing cells, from which weighing sections can be defined.

8. Device (1) according to claim 7, wherein the cells have a size equal or less than 3 x 3 cm, preferably equal or less than 2 x 2 cm, and even more preferably equal or less than 1 x 1 cm.

9. Device (1) according to any of the preceding claims, comprising a plurality of cutting units downstream the weighing units, each cutting unit for cutting one of the parallel dough pieces.

10. Method for measuring the weight of a dough piece with length U,D (unit, decimal) times the length of the combined weighing sections (3, 4, 5) in one weighing row of a device (1) according to claim 1, wherein each row comprises a plurality of rectangular weighing sections (3, 4, 5), comprising the steps of:
A. Transporting at least one endless dough piece on a lane of the conveyor;
B. Virtually splitting up the length of a dough piece to be weighed into sub-pieces with lengths that correspond to weighing sections (3, 4, 5);
C. Measuring the weight of the sub-pieces when they pass the corresponding weighing section (3, 4, 5);
D. Displacing the dough one combined length of the weighing sections (3, 4, 5);
E. Repeating steps B to D U-1 times;
F. Measuring the weight on the weighing sections (3, 4, 5) again after a displacement of the dough of 0,D length of the weighing section (3, 4, 5) and multiplying the measurement value by 0,D;
G. Adding up the weights thus obtained.

11. Method for measuring a weight of a dough piece with a device according to claim 6 or 7, comprising the steps of:
A. Transporting at least one endless dough piece on a lane of the conveyor;
B. Configuring an array of weighing sections that corresponds to the format of a dough piece to be weighed;
C. Measuring the weight on the weighing sections (3, 4, 5) of the array;
F. Adding up the weights thus obtained.

12. Method according to claim 10 or 11, wherein a shorter or longer length of a dough piece on a lane than an expected length corresponding to a desired weight is measured, when said expected length is not an exact multiple of weighing cells of sections, wherein the weight of the expected length is determined by extrapolation or interpolation respectively.

13. Method for controlling a cutting device for an endless dough piece, comprising:
H. Obtaining a weight setpoint for a dough piece to be cut;
I. Determining an expected length of the endless dough piece, expected to have the setpoint weight, based on an expected weight per unit of length;
J. Determining the weight of a dough piece with the expected length, according to the method of claims 10, 11 or 12;
K. Calculating multiplication factor that indicates how many times an expected weight the determined weight is;
L. Dividing an expected length of the dough piece to be cut by the multiplication factor;
M. Cutting the dough piece at the divided length.

## Patentansprüche

1. Vorrichtung (1) zum Wiegen von Teig, umfassend:
- ein einzelnes Endlosförderband (2),
- zum Befördern einer Mehrzahl von endlosen oder kontinuierlichen Teigstücken (8, 9, 10, 11), die im Wesentlichen in parallelen Bahnen in einer Beförderungsrichtung auf dem Förderband verlaufen;
- eine Wiegeeinheit, eingerichtet unter dem Endlosförderband,
wobei
- die Wiegeeinheit mehrere Wiegereihen umfasst,
verteilt über der Breite des Förderbands, und
- jede Reihe mindestens einen rechteckigen Wiegeabschnitt (3, 4, 5) umfasst, um unabhängig von den anderen Wiegeabschnitten ein unterschiedliches Teigstück der Mehrzahl von endlosen oder kontinuierlichen Teigstücken zu wiegen, **dadurch gekennzeichnet, dass**
- mindestens eine Reihe eine Mehrzahl von Wiegeabschnitten umfasst, hintereinander eingerichtet in der Beförderungsrichtung, wobei mindestens einer der Wiegeabschnitte eine von den anderen unterschiedliche Länge aufweist.

2. Einrichtung (1) nach Anspruch 1, wobei jeder der Wiegeabschnitte (3, 4, 5) verglichen mit Wiegeabschnitten in der gleichen Reihe eine unterschiedliche Länge aufweist.

3. Einrichtung (1) nach einem der vorstehenden Ansprüche, wobei ein Wiegeabschnitt (3, 4, 5) durch einen Tisch gebildet wird, der eine Länge zwischen 5 cm und 80 cm aufweist.

4. Einrichtung (1) nach einem der vorstehenden Ansprüche, umfassend einen Prozessor zum Empfangen von Gewichtsinformation von den Wiegeabschnitten (3, 4, 5) und von Verlagerungsinformation des Förderbands (2) und zum Ermitteln des Gewichts pro Längeneinheit des Teigs auf jeder Bahn.

5. Einrichtung (1) nach Anspruch 4, wobei der Prozessor ferner ausgelegt ist zum Erzeugen eines Steuersignals für eine weitere Verarbeitungseinrichtung auf jeder Bahn, wie eine Schneideinrichtung, um die weitere Verarbeitungseinrichtung zu steuern, basierend auf dem ermittelten Gewicht, wie dem kumulierten Gewicht pro Bahn.

6. Einrichtung (1) nach einem der vorstehenden Ansprüche, wobei die Wiegeeinheit eine Wiegefläche (27) umfasst, in der Wiegereihen und Wiegeabschnitte einrichtbar sind.

7. Einrichtung (1) nach Anspruch 6, wobei die Wiegefläche (27) eine Wiegematrix mit Wiegezellen umfasst, aus der Wiegeabschnitte definiert werden können.

8. Einrichtung (1) nach Anspruch 7, wobei die Zellen eine Größe gleich oder kleiner als 3 cm x 3 cm, vorzugsweise gleich oder kleiner als 2 cm x 2 cm und noch stärker bevorzugt gleich oder kleiner als 1 cm x 1 cm aufweisen.

9. Einrichtung (1) nach einem der vorstehenden Ansprüche, umfassend eine Mehrzahl von Schneideinheiten in Laufrichtung hinter den Wiegeeinheiten, wobei jede Schneideinheit zum Schneiden von einem der parallelen Teigstücke dient.

10. Verfahren zum Messen des Gewichts eines Teigstücks mit Länge U,D (Einheit, dezimal) mal der Länge der kombinierten Wiegeabschnitte (3, 4, 5) in einer Wiegereihe einer Einrichtung (1) nach Anspruch 1, wobei jede Reihe eine Mehrzahl von rechteckigen Wiegeabschnitten (3, 4, 5) umfasst, umfassend die Schritte:
A. Transportieren von mindestens einem endlosen Teigstück auf einer Bahn des Förderbandes;
B. Virtuelles Aufteilen der Länge eines zu wiegenden Teigstücks in Unterstücke mit Längen, die Wiegeabschnitten (3, 4, 5) entsprechen;
C. Messen des Gewichts der Unterstücke, wenn sie den dazugehörigen Wiegeabschnitt (3, 4, 5) durchlaufen;
D. Versetzen des Teigs um eine kombinierte Länge der Wiegeabschnitte (3, 4, 5);
E. Wiederholen der Schritte B bis D (U-1)-mal;
F. erneutes Messen des Gewichts auf den Wiegeabschnitten (3, 4, 5) nach einem Versetzen des Teigs um 0,D Länge des Wiegeabschnitts (3, 4, 5) und Multiplizieren des Messwerts um 0,D;
G. Aufaddieren der so erhaltenen Gewichte.

11. Verfahren zum Messen eines Gewichts eines Teigstücks mit einer Einrichtung nach Anspruch 6 oder 7, umfassend die Schritte
A. Transportieren von mindestens einem endlosen Teigstück auf einer Bahn des Förderbandes;
B. Einrichten einer Anordnung von Wiegeabschnitten, die dem Format eines zu wiegenden Teigstücks entspricht;
C. Messen des Gewichts auf den Wiegeabschnitten (3, 4, 5) der Anordnung;
D. Aufaddieren der so erhaltenen Gewichte.

12. Verfahren nach Anspruch 10 oder 11, wobei eine Länge eines Teigstücks, die kürzer oder länger ist als eine erwartete Länge entsprechend einem erwünschten Gewicht, auf einer Bahn gemessen wird, wenn die erwartete Länge nicht ein exaktes Mehrfaches der Gewichtszellen von Abschnitten ist, wobei das Gewicht der erwarteten Länge durch Extrapolation bzw. Interpolation ermittelt wird.

13. Verfahren zum Steuern einer Schneideinrichtung für ein endloses Teigstück, umfassend:
H. Erhalten eines Gewichtssollwerts für ein zu schneidendes Teigstück;
I. Bestimmen einer erwarteten Länge des endlosen Teigstücks, für die der Gewichtssollwert erwartet wird, basierend auf einem erwarteten Gewicht pro Längeneinheit;
J. Bestimmen des Gewichts eines Teigstücks mit der erwarteten Länge gemäß dem Verfahren der Ansprüche 10, 11 oder 12;
K. Berechnen eines Multiplikationsfaktors, der angibt, welches Vielfache eines erwarteten Gewichts das ermittelte Gewicht ist;
L. Teilen einer erwarteten Länge des zu schneidenden Teigstücks durch den Multiplikationsfaktor;
M. Schneiden des Teigstücks an der geteilten Länge.

## Revendications

1. Dispositif (1) pour peser une pâte, comprenant:
une bande transporteuse sans fin simple (2),
pour transporter une pluralité de pièces de pâte continues ou sans fin (8, 9, 10, 11) qui s'étendent essentiellement dans des voies parallèles sur ledit transporteur dans une direction de transport;
une unité de pesée agencée en dessous de la bande transporteuse sans fin,
dans lequel l'unité de pesée comprend de multiples rangées de pesée, réparties sur la largeur du transporteur, et
chaque rangée comprenant au moins une section de pesée rectangulaire (3, 4, 5), pour, indépendamment des autres sections de pesée, peser une pièce de pâte différente de ladite pluralité de pièces de pâte continues ou sans fin,
**caractérisé en ce qu'**au moins une rangée comprend une pluralité de sections de pesée, agencées les unes derrière les autres dans la direction de transport;
dans lequel au moins une des sections de pesée présente une longueur différente des autres.

2. Dispositif (1) selon la revendication 1, dans lequel chacune des sections de pesée (3, 4, 5) présente une longueur différente comparativement aux sections de pesée dans la même rangée de pesée.

3. Dispositif (1) selon l'une quelconque des revendications précédentes, dans lequel une section de pesée (3, 4, 5) est formée par une table, qui présente une longueur comprise entre 5 cm et 80 cm.

4. Dispositif (1) selon l'une quelconque des revendications précédentes, comprenant un processeur, pour recevoir des informations de poids en provenance des sections de pesée (3, 4, 5) et des informations de déplacement du transporteur (2), et pour déterminer le poids par unité de longueur de la pâte sur chaque voie.

5. Dispositif (1) selon la revendication 4, dans lequel le processeur est en outre configuré de manière à générer un signal de commande pour un dispositif de traitement supplémentaire de chaque voie, tel qu'un couteau, afin de commander ledit dispositif de traitement supplémentaire sur la base du poids déterminé, par exemple le poids cumulé par voie.

6. Dispositif (1) selon l'une quelconque des revendications précédentes, dans lequel l'unité de pesée comprend une zone de pesée (27), dans lequel des rangées de pesée et des sections de pesée sont configurables.

7. Dispositif (1) selon la revendication 6, dans lequel la zone de pesée (27) comprend une matrice de pesée, comprenant des cellules de pesée, à partir desquelles des sections de pesée peuvent être définies.

8. Dispositif (1) selon la revendication 7, dans lequel les cellules présentent une taille égale ou inférieure à 3 cm x 3 cm, de préférence égale ou inférieure à 2 cm x 2 cm, et mieux encore égale ou inférieure à 1 cm x 1 cm.

9. Dispositif (1) selon l'une quelconque des revendications précédentes, comprenant une pluralité d'unités de coupe situées en aval des unités de pesée, chaque unité de coupe étant prévue pour couper une des pièces de pâte parallèles.

10. Procédé pour mesurer le poids d'une pièce de pâte d'une longueur égale à U,D (unité, décimale) fois la longueur des sections de pesée combinées (3, 4, 5) dans une rangée de pesée d'un dispositif (1) selon la revendication 1, dans lequel chaque rangée comprend une pluralité de sections de pesée rectangulaires (3, 4, 5), comprenant les étapes suivantes:
A. transporter au moins une pièce de pâte sans fin sur une voie du transporteur;
B. diviser virtuellement la longueur d'une pièce de pâte à peser en sous-pièces avec des longueurs qui correspondent aux sections de pesée (3, 4, 5)
C. mesurer le poids de la pâte des sous-pièces lorsqu'elles franchissent sur la section de pesée correspondante (3, 4, 5);
D. déplacer la pâte d'une longueur combinée des sections de pesée (3, 4, 5);
E. répéter les étapes B à D U-1 fois;
F. mesurer à nouveau le poids sur les sections de pesée (3, 4, 5) après un déplacement de la pâte de 0,D longueur de la section de pesée (3, 4, 5) et multiplier la valeur de mesure par 0,D; et
G. additionner les poids ainsi obtenus.

11. Procédé pour mesurer le poids d'une pièce de pâte avec un dispositif selon la revendication 6 ou 7, comprenant les étapes suivantes:
A. transporter au moins une pièce de pâte sans fin sur une voie du transporteur;
B. configurer un réseau de sections de pesée qui correspond au format d'une pièce de pâte à peser;
C. mesurer le poids sur les sections de pesée (3, 4, 5) du réseau; et
F. additionner les poids ainsi obtenus.

12. Procédé selon la revendication 10 ou 11, dans lequel une longueur d'une pièce de pâte sur une voie plus courte ou plus longue qu'une longueur attendue correspondant à un poids souhaité est mesurée, lorsque ladite longueur attendue n'est pas un multiple exact de cellules de pesée de sections, dans lequel le poids de la longueur attendue est déterminé par extrapolation ou par interpolation, respectivement.

13. Procédé pour commander un dispositif de coupe pour une pièce de pâte sans fin, comprenant les étapes suivantes:
H. obtenir une valeur de consigne de poids pour une pièce de pâte à couper;
I. déterminer une longueur attendue de la pièce de pâte sans fin, supposée présenter le poids de consigne, sur la base d'un poids attendu par unité de longueur;
J. déterminer le poids d'un pièce de pâte présentant la longueur attendue, suivant le procédé selon les revendications 10, 11 ou 12;
K. calculer un facteur de multiplication qui indique à combien de fois un poids attendu le poids déterminé est égal;
L. diviser une longueur attendue de la pièce de pâte à couper par le facteur de multiplication; et
M. couper la pièce de pâte à la longueur divisée.
